# EUROPÄISCHE PATENTSCHRIFT

(11) **EP 0 770 012 B1**
(45) Veröffentlichungstag und Bekanntmachung des Hinweises auf die Patenterteilung: **06.10.1999**
(21) Anmeldenummer: 95925849.2
(22) Anmeldetag: 08.07.1995
(51) Int. Cl.: B60T 8/48, B60T 8/24

(54) **VERFAHREN ZUM BETREIBEN EINER BLOCKIERGESCHÜTZTEN KRAFTFAHRZEUGBREMSANLAGE**
PROCESS FOR OPERATING AN ANTI-LOCK MOTOR VEHICLE BRAKING SYSTEM
PROCEDE DE FONCTIONNEMENT D'UN SYSTEME DE FREINAGE D'AUTOMOBILE A ANTIBLOCAGE

(30) Priorität: 20.07.1994 DE 4425578
(43) Veröffentlichungstag der Anmeldung: 02.05.1997
(73) Patentinhaber: Continental Teves AG & Co. oHG, 60488 Frankfurt (DE)
(72) Erfinder: BURGDORF, Jochen, D-63075 Offenbach (DE); KIRCHER, Dieter, D-61118 Bad Vilbel (DE); GRÄBER, Johannes, D-65760 Eschborn (DE); DRUMM, Stefan, D-55291 Saulheim (DE)
(86) Internationale Anmeldenummer: EP9502664
(87) Internationale Veröffentlichungsnummer: WO9602409

(56) Entgegenhaltungen:
- DE-A- 3 906 530
- DE-A- 3 910 285
- DE-C- 4 009 640
- DE-C- 4 208 496
- DE-C- 4 232 311
- DE-C- 4 329 140
- GB-A- 2 218 479
- GB-A- 2 242 489
- GB-A- 2 259 122
- US-A- 5 248 189

## Beschreibung

Die Erfindung betrifft ein Verfahren zum Betreiben einer blockiergeschützten Kraftfahrzeugbremsanlage zur Fahrstabilitäts- und/oder Antriebsschlupfregelung, die einen pneumatischen Bremskraftverstärker sowie einen dem Bremskraftverstärker nachgeschalteten Hauptbremszylinder aufweist, an dessen Druckräume über ein eine Rückforderpumpe aufweisendes ABS-Hydroaggregat den einzelnen Fahrzeugrädern zugeordnete Radbremsen angeschlossen sind, die mit einem an der Saugseite der Rückförderpumpe angeschlossenen Niederdruckspeicher verbindbar sind und die beim Eintritt in die Fahrstabilitäts- und/oder Antriebsschlupfregelung vorgefüllt werden, wobei nach dem Vorfüllen die Verbindung zwischen dem Hauptbremszylinder und den Radbremsen mittels eines Trennventils geschlossen wird und der weitere Druckaufbau in den Radbremsen mit der Rückförderpumpe erfolgt.

Aus der DE- 42 08 496 C1 ist eine Bremsanlage bekannt, deren Bremskraftverstärker zur Realisierung eines mit einer hohen Fahrzeugverzögerung verknüpften automatisch gesteuerten Bremsvorganges mit einem Magnetventil zusammenwirkt, das bei einer raschen Betätigung des Bremspedals eine erhöhte Bremsdruck-Entfaltung ermöglicht. Zur Realiserung dieses Bremsdruck-Steuerungskonzepts sind ein Bremspedal-Stellungsgeber, ein Bremslichtschalter sowie ein eine Fahrerverzögerungswunsch-Erkennung ermöglichender Kraftsensor vorgesehen. Außerdem sieht die bekannte Bremsanlage ein Antiblockierregelsystem (ABS) vor, das bei einer Bremsung für stabiles Verzögerungsverhalten des Fahrzeuges sorgt.

Der erwähnten Patentschrift sind jedoch keine konkreten Hinweise zu entnehmen, wie die darin beschriebene Bremsanlage zum Zwecke einer Fahrstabilitätsregelung verwendet werden könnte.

Aus der DE- 42 32 311 A1 ist eine hydraulische Fahrzeugbremsanlage mit einer Blockierschutzeinrichtung bekannt, die zur Verbesserung des Fahrzeugspurverhaltens, insbesondere beim Fahren in Kurven durch automatisches Bremsen, eine Hilfsdruckquelle aufweist, die dem Vorfüllen der Fahrzeugradbremsen sowie dem Vorladen der Rückförderpumpe dient. Die Hilfsdruckquelle, die durch eine Parallelschaltung einer Hilfspumpe, einer Drossel sowie eines Hilfsdruckbegrenzungsventils gebildet ist, ist an einem Eingangsanschluß je eines hydraulischen Zylinders angeschlossen, der an die Verbindung zwischen Ausgang einer aus einem Bremskraftverstärker sowie einem ihm nachgeschalteten Hauptzylinder bestehenden Betätigungseinheit und dem ABS-Hydroaggregat bzw. der Radbremse geschaltet ist. Ein zweiter Eingang des Zylinders ist mit dem Hauptbremszylinder verbunden, wobei im Zylinder ein mit dem Hilfsdruck beaufschlagbarer Trennkolben geführt ist, der ein Ventil aufnimmt, das in Ruhestellung offen ist und eine Verbindung zwischen dem Hauptbremszylinder und der Radbremse ermöglicht. Wird die Hilfspumpe gestartet, so wird der Trennkolben verschoben, wodurch das Ventil die vorhin erwähnte Verbindung absperrt und das vom Trennkolben verdrängte Druckmittelvolumen ein Vorfüllen der Radbremsen und das Vorladen der Rückförderpumpe bewirkt. Als nachteilig ist jedoch der verhältnismäßig hohe technische Aufwand anzusehen, der zur Realisierung des bekannten Verfahrens erforderlich ist.

Schließlich ist aus der GB-A-2 259 122, welche die Merkmale des Oberbegriffes des vorliegenden Anspruchs 1 aufweist, eine Kraftfahrzeugbremsanlage bekannt, bei der in einer den Hauptbremszylinder mit der Saugseite einer Rückförderpumpe, an die gleichzeitig ein Niederdruckspeicher angeschlossen ist, verbindenden hydraulischen Leitung ein stromlos offenes Saugventil eingefügt ist, das bei jeder vom Fahrzeugfahrer eingeleiteten Bremsung in seine Schließstellung umgeschaltet wird, so daß die Saugseite der Rückförderpumpe mit dem im Hauptbremszylinder eingesteuerten Druck nicht beaufschlagt werden kann. Zum Vorfüllen der Radbremsen ist eine vorzugsweise pneumatisch betätigbare Druckerzeugungseinrichtung vorgesehen, die in einem einem Hauptbremszylinder zugeordneten Druckmittelvorratsbehälter angeordnet ist. Die Verwendung der zusätzlichen Druckerzeugungseinrichtung, die eine mögliche Störungsquelle darstellt, ist jedoch mit einem nicht vernachlässigbaren Kostenaufwand verbunden.

Darüber hinaus kann nach einem Vorfüllen der Bremsen die Saugseite der Rückförderpumpe nicht einwandfrei mit dem vom Hauptbremszylinder erzeugten Druck baufschlagt werden, weil mit dem Hauptbremszylinder zur Verfügung gestellten Druckmittelvolumen zunächst der der Rückförderpumpe vorgeschaltete Druckmittelspeicher gefüllt und der Hauptbremszylinderdruck reduziert wird.

Es ist daher Aufgabe der vorliegenden Erfindung, ein Verfahren zum Betreiben einer blockiergeschützten Kraftfahrzeugbremsanlage der eingangs genannten Art vorzuschlagen, das unter Verwendung von in Bremsanlagen vorhandenen Bauteilen einfach und kostengünstig realisierbar ist.

Die Aufgabe wird erfindungsgemäß dadurch gelöst, daß das Vorfüllen durch eine vom Fahrerwillen unabhängige Betätigung des Bremskraftverstärkers erfolgt und daß nach dem Vorfüllen der Radbremsen während der Fahrstabilitäts- und/oder Antriebsschlupfregelung die Saugseite der Rückförderpumpe mit dem Hauptbremszylinderdruck beaufschlagt wird, indem die vom Fahrerwillen unabhängige Betätigung des Bremskraftverstärkers aufrechterhalten wird, wobei die Verbindung vom Hauptbremszylinder zum Niederdruckspeicher gesperrt ist. Durch diese Maßnahme wird eine günstige Versorgung der Rückförderpumpe mit Druckmittel erreicht.

Eine Begrenzung der während eines Fahrstabilitäts- bzw. Antriebschlupf-Regelvorgangs durch die gleichzeitige Betätigung durch den Fahrer und die Fremdansteuerung des Bremskraftverstärkers verursachten Belastung der Rückförderpumpe wird nach einem weiteren vorteilhaften Merkmal dadurch erreicht, daß die Betätigung des Bremskraftverstärkers durch den Fahrer sensiert wird, und die vom Fahrerwillen unabhängige Betätigung dementsprechend verringert wird.

Um den vom Fahrer und/oder dem Bremskraftverstärker eingesteuerten hydraulischen Druck zu erkennen, kann weiter vorgesehen werden, daß der im Hauptbremszylinder eingesteuerte hydraulische Druck fortlaufend ermittelt wird. Um dabei eine redundante Information über die Druckwerte zu erhalten, kann vorgesehen werden, daß die Druckermittlung mittels an die Druckräume des Hauptbremszylinders angeschlossener Drucksensoren erfolgt. Bei bekannter Aussteuerung des Bremskraftverstärkers läßt sich daraus der Fahrerverzögerungswunsch ermitteln.

Eine zuverlässige Erkennung des Fahrerverzögerungswunsches wird bei einer vorteilhaften Weiterbildung des Erfindungsgegenstandes dadurch gewährleistet, daß die mit einem den Bremskraftverstärker betätigenden Pedal eingeleitete Betätigungskraft sensiert wird.

Nach einem weiteren vorteilhaften Merkmal wird der Ausgangsdruck der Rückförderpumpe begrenzt, vorzugsweise auf einen vom Fahrzeughersteller für einen Fremdeingriff empfohlenen Wert.

Außerdem ist für den vorgesehenen Betrieb erforderlich, daß die hydraulische Verbindung zwischen dem Hauptbremszylinder und der Saugseite der Rückförderpumpe bei beliebigen Hauptbremszylinderdrücken abgesperrt werden kann. Dabei wird die hydraulische Verbindung vorzugsweise nur solange abgesperrt, bis das im Niederdruckspeicher befindliche Druckmittelvolumen auf die Druckseite der Rückförderpumpe gefördert wurde. Durch diese Maßnahme wird gewährleistet, daß keine Unterbrechung der Druckmittelversorgung der Rückförderpumpe bei einem Entleeren des Niederdruckspeichers stattfindet.

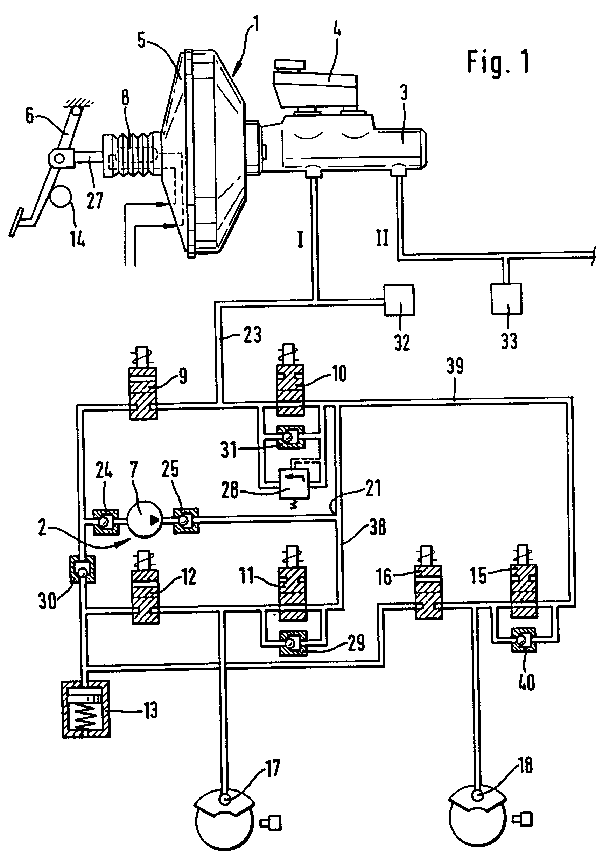

Die Erfindung wird im nachfolgenden Text an einem Ausführungsbeispiel im Zusammenhang mit einer beiliegenden Zeichnung näher erläutert, deren einzige Figur eine Ausführung einer blockiergeschützten Kraftfahrzeugbremsanlage zeigt, mit der das erfindungsgemäße Verfahren realisiert werden kann.

Die in der Zeichnung dargestellte erfindungsgemäße Bremsanlage zur Durchführung des erfindungsgemäßen Verfahrens weist zwei Bremskreise I und II auf, deren Aufbau völlig identisch ist, so daß die folgende Beschreibung eines Bremskreises ebenso auf den anderen zutrifft. Die gezeigte Bremsanlage besteht im wesentlichen aus zwei voneinander unabhängig betätigbaren Bremsdruckgebern 1,2, an die über nicht näher bezeichnete hydraulische Leitungen Radbremszylinder 17,18 anschließbar sind, sowie einem nicht gezeigten elektronischen Regler mit zugehöriger Sensorik. Die Zuordnung der Radbremszylinder 17,18 der einzelnen Bremskreise I, II ist derart getroffen, daß der erste Radbremszylinder 17 entweder einem Rad einer Fahrzeugachse und der andere Radbremszylinder 18 dem diagonal gegenüberliegenden Rad der anderen Fahrzeugachse zugeordnet ist (diagonale Aufteilung der Bremskreise) oder aber beide Radbremszylinder 17 und 18 derselben Fahrzeugachse zugeordnet sind (Schwarzweiß-Aufteilung der Bremskreise).

Der vom Fahrer des Kraftfahrzeuges mittels eines Bremspedals 6 betätigbare, erste Druckgeber 1 besteht aus einem beispielsweise pneumatischen Bremskraftverstärker 5, dem ein Hauptbremszylinder, vorzugsweise ein Tandemhauptzylinder 3 nachgeschaltet ist, dessen nicht gezeigte Druckräume mit einem Druckmittelvorratsbehälter 4 verbindbar sind. An das Bremspedal 6 ist eine Betätigungsstange 27 angekoppelt, die eine Betätigung eines lediglich schematisch angedeuteten Steuerventils 8 ermöglicht, das den Aufbau eines pneumatischen Differenzdruckes im Gehäuse des Unterdruckbremskraftverstärkers 5 steuert. Ein nicht dargestellter, durch Steuersignale des elektronischen Reglers ansteuerbarer Elektromagnet ermöglicht dabei eine Fremdbetätigung des Steuerventils 8 unabhängig von einer am Bremspedal 6 eingeleiteten Betätigungskraft.

Ein mit dem Bremspedal 6 in Wirkverbindung stehender Bremslichtschalter 14 ermöglicht die Erkennung einer Ansteuerung des Bremskraftverstärkers 5 durch den Fahrer oder durch eine Fremdbetätigung. Bei einer Fremdbetätigung des Bremskraftverstärkers 5 wird das Bremspedal 6 mitgeführt und so der Bremslichtschalter 14 umgesteuert. Eine durch den Fahrer eingeleitete Betätigung des Bremskraftverstärkers 5 kann durch den Einsatz eines nicht gezeigten Löseschalters erkannt werden.

Der zweite Druckgeber 2 ist durch ein Motor-Pumpen-Aggregat gebildet, das aus einer durch einen nicht gezeigten Elektromotor angetriebenen hydraulischen Rückförderpumpe 7 besteht, deren Saugseite über ein erstes Rückschlagventil 24 sowie ein elektromagnetisch betätigbares Schaltventil 9 an den ersten Druckraum des Hauptbremszylinders 3 angeschlossen ist. Von der Druckseite der Rückförderpumpe 7 strömt das Druckmittel über ein zweites Rückschlagventil 25 und eine nicht gezeigte Dämpfungskammer zu einem hydraulischen Knotenpunkt 21. An diesen angeschlossen ist sowohl ein zum ersten Radbremszylinder 17 führender Leitungsabschnitt 38 als auch ein zum zweiten Radbremszylinder 18 führenden Leitungsabschnitt 39. Eine hydraulische Leitung 23 verbindet die Druckseite der Rückförderpumpe 7 mit dem Tandemhauptzylinder 3. Außerdem ist zwischen dem Knotenpunkt 21 und dem Hauptbremszylinder 3 ein vorzugsweise elektromagnetisch betätigbares Trennventil 10 geschaltet, dem sowohl ein drittes Rückschlagventil 31 als auch ein Druckbegrenzungsventil 28 parallelgeschaltet ist. Zur Modulation des im ersten Radbremszylinder 17 eingesteuerten Drucks dienen eine Parallelschaltung eines Einlaß- (11) mit einem vierten Rückschlagventil 29 sowie ein Auslaßventil 12, wobei die erwähnte Parallelschaltung im Leitungsabschnitt 38 eingefügt ist und das Auslaßventil 12 zum Zwecke eines Radbremsdruckabbaus eine Verbindung zwischen dem ersten Radbremszylinder 17 und einem Niederdruckspeicher 13 ermöglicht, der über ein fünftes Rückschlagventil 30 mit der Saugseite der Ruckförderpumpe 7 verbunden ist.

Um in dem zum betrachteten Bremskreis gehörenden zweiten Radbremszylinder 18 analog zum bereits betrachteten Radbremszylinder 17 den darin eingesteuerten hydraulischen Druck regulieren zu können, sind eine zweite Parallelschaltung eines zweiten Einlaß- (15) mit einem sechsten Rückschlagventil 40 sowie ein zweites Auslaßventil 16 vorgesehen, wobei die erwähnte Parallelschaltung im Leitungsabschnitt 39 eingefügt ist und das Auslaßventil 16 zum Zwecke eines Radbremsdruckabbaus eine Verbindung zwischen dem zweiten Radbremszylinder 18 und dem Niederdruckspeicher 13 herstellt.

Um schließlich vom Fahrer im Tandemhauptbremszylinder 3 eingeleitete Druckänderungen zu erkennen sind in beiden Bremskreisen I, II Mittel zur Erfassung der Hauptbremszylinderdrücke vorgesehen, die vorzugsweise durch an den ersten und den zweiten Bremskreis I,II angeschlossene Drucksensoren 32, 33 gebildet sind.

Bei einer Normalbremsung kann in den Radbremszylindern 17,18 sowohl ein Druckauf- als auch ein Druckabbau durch entsprechende Betätigung des ersten Bremsdruckgebers 1 über das offene Trennventil 10 sowie die offenen Einlaßventile 11,15 erfolgen.

Bei einer ABS-Regelbremsung, bei der beispielsweise das der Radbremse 17 zugeordnete Rad zu blockieren droht, wird die Rückförderpumpe 7 gestartet. Sowohl das Schalt-(9) als auch das Trennventil 10 bleiben unbetätigt. Die Druckmodulation erfolgt durch entsprechendes Schalten des Ein- und des Auslaßventils 11 und 12, wobei das in den Niederdruckspeicher 13 abgelassene Druckmittel mit der Rückförderpumpe 7 auf das Hauptbremszylinder-Druckniveau zurückgefördert wird.

Beim Eintritt in jeden Fremdbremsvorgang wird während der Anlaufphase der Rückförderpumpe 7 der Bremskraftverstärker 5 unabhängig vom Fahrerwillen angesteuert, so daß die Radbremsen 17, 18 vorgefüllt werden. Für einen weiteren Druckaufbau wird das Trennventil 10 geschlossen und das Schaltventil 9 geöffnet. Dadurch erzeugt die Rückförderpumpe 7 am Knotenpunkt 21 einen durch das Druckbegrenzungsventil 28 begrenzten hohen Druck, der es ermöglicht, durch Schalten der ABS-Ein- und Auslaßventile 11,15 und 12, 16 den gewünschten Fremdbremsdruck in den Radbremszylindern 17,18 individuell einzustellen. Nach dem Umschalten der Ventile 9 und 10 kann die Ansteuerung des Bremskraftverstärkers 5 soweit zurückgenommen werden, daß der Saugseite der Rückförderpumpe 7 ein noch ausreichender Druckmittelvolumenstrom zugeführt wird. Durch die Drucksensoren 32,33 wird der im Hauptbremszylinder 3 herrschende Druck, der durch die gleichzeitige Fahrer- und Fremdbetätigung des Bremskraftverstärkers 5 eingestellt wurde, kontinuierlich überwacht. Dabei kann es auch sinnvoll sein, die durch den Fahrer einegeleitete Betätigungskraft mittels eines Kraftsensors zu überwachen.

Ein Druckaufbau erfolgt über das offene Einlaßventil 11. Eine Druckhaltephase wird durch Umschalten des Einlaßventils 11 erreicht, während ein Druckabbau durch Umschalten des Auslaßventils 12 bei noch geschlossenem Einlaßventil 11 erfolgt. Mit Hilfe von Druck-Aufbau-, -Halte- und Abbauphasen wird der für die Regelung erforderliche Druckverlauf erzeugt. Das in den Niederdruckspeicher 13 abgelassene Druckmittel wird durch die Rückförderpumpe 7 zurückgefördert. Dies wird durch Umschalten des Schaltventils 9 in seinen geschlossenen Zustand ermöglicht, in dem die Saugseite der Rückförderpumpe 7 vom Hauptbremzylinder 3 getrennt wird, und zwar solange, bis der Niederdruckspeicher 13 entleert ist.

### Bezugszeichenliste

- 1: Bremsdruckgeber
- 2: Bremsdruckgeber
- 3: Hauptbremszylinder
- 4: Druckmittelvorratsbehälter
- 5: Bremskraftverstärker
- 6: Bremspedal
- 7: Rückförderumpe
- 8: Steuerventil
- 9: Schaltventil
- 10: Trennventil
- 11: Einlaßventil
- 12: Auslaßventil
- 13: Niederdruckspeicher
- 14: Bremslichtschalter
- 15: Einlaßventil
- 16: Auslaßventil
- 17: Radbremszylinder
- 18: Radbremszylinder
- 19:
- 20:
- 21: Knotenpunkt
- 22:
- 23: Leitung
- 24: Rückschlagventil
- 25: Rückschlagventil
- 26:
- 27: Betätigungsstange
- 28: Druckbegrenzungsventil
- 29: Rückschlagventil
- 30: Rückschlagventil
- 31: Rückschlagventil
- 32: Drucksensor
- 33: Drucksensor
- 34:
- 35:
- 36:
- 37:
- 38: Leitungsabschnitt
- 39: Leitungsabschnitt
- 40: Rückschlagventil

## Patentansprüche

1. Verfahren zum Betreiben einer blockiergeschützten Kraftfahrzeugbremsanlage zur Fahrstabilitäts- und/oder Antriebsschlupfregelung, die einen pneumatischen Bremskraftverstärker (5) sowie einen dem Bremskraftverstärker (5) nachgeschalteten Hauptbremszylinder (3) aufweist, an dessen Druckräume über ein eine Rückforderpumpe (7) aufweisendes ABS-Hydroaggregat den einzelnen Fahrzeugrädern zugeordnete Radbremsen (17,18) angeschlossen sind, die mit einem an der Saugseite der Rückförderpumpe (7) angeschlossenen Niederdruckspeicher (13) verbindbar sind und die beim Eintritt in die Fahrstabilitäts- und/oder Antriebsschlupfregelung vorgefüllt werden, wobei nach dem Vorfüllen die Verbindung zwischen dem Hauptbremszylinder (3) und den Radbremsen (17,18) mittels eines Trennventils (10) geschlossen wird und der weitere Druckaufbau in den Radbremsen (17,18) mit der Rückförderpumpe (7) erfolgt, dadurch **gekennzeichnet**, daß das Vorfüllen durch eine vom Fahrerwillen unabhängige Betätigung des Bremskraftverstärkers (5) erfolgt und daß nach dem Vorfüllen der Radbremsen (17,18) während der Fahrstabilitäts- und/oder Antriebsschlupfregelung die Saugseite der Rückförderpumpe (7) mit dem Hauptbremszylinderdruck beaufschlagt wird, indem die vom Fahrerwillen unabhängige Betätigung des Bremskraftverstärkers (5) aufrechterhalten wird, wobei die Verbindung vom Hauptbremszylinder (3) zum Niederdruckspeicher (13) gesperrt ist.

2. Verfahren nach Anspruch 1, dadurch **gekennzeichnet**, daß die Betätigung des Bremskraftverstärkers (5) durch den Fahrer sensiert wird, und die vom Fahrerwillen unabhängige Betätigung dementsprechend verringert wird.

3. Verfahren nach Anspruch 1 oder 2, dadurch **gekennzeichnet**, daß der im Hauptbremszylinder (3) eingesteuerte hydraulische Druck fortlaufend ermittelt wird.

4. Verfahren nach Anspruch 3, dadurch **gekennzeichnet**, daß die Druckermittlung mittels an die Druckräume des Hauptbremszylinders (3) angeschlossener Drucksensoren (22 bzw. 32,33) erfolgt.

5. Verfahren nach einem der Ansprüche 1 bis 4, dadurch **gekennzeichnet**, daß die mit einem den Bremskraftverstärker (5) betätigenden Pedal (6) eingeleitete Betätigungskraft sensiert wird.

6. Verfahren nach einem der vorhergehenden Ansprüche, dadurch **gekennzeichnet**, daß der Ausgangsdruck der Rückförderpumpe (7) begrenzt wird.

7. Verfahren nach einem der vorhergehenden Ansprüche, dadurch **gekennzeichnet**, daß die hydraulische Verbindung zwischen dem Hauptbremszylinder (3) und der Saugseite der Rückförderpumpe (7) bei beliebigen Hauptbremszylinderdrücken abgesperrt wird.

8. Verfahren nach Anspruch 7, dadurch **gekennzeichnet**, daß die hydraulische Verbindung zwischen dem Hauptbremszylinder (3) und der Saugseite der Rückförderpumpe (7) nur solange abgesperrt wird, bis das im Niederdruckspeicher (13) befindliche Druckmittelvolumen auf die Druckseite der Rückförderpumpe (7) gefördert wurde.

## Claims

1. Method of operating an anti-lock automotive vehicle brake system for driving stability control and/or traction slip control, including a pneumatic brake power booster (5) and a master brake cylinder (3) connected downstream of the brake power booster (5), wherein the pressure chambers of the master brake cylinder are connected to wheel brakes (17, 18) which are associated with the individual vehicle wheels by way of an ABS hydraulic unit with a return pump (7) and are connectable to a low-pressure accumulator (13) that is connected to the suction side of the return pump (7) and are prefilled upon commencement of driving stability and/or traction slip control, wherein after the prefilling action the connection between the master brake cylinder (3) and the wheel brakes (17, 18) is closed by way of a separating valve (10) and further pressure increase in the wheel brakes (17, 18) is carried out by way of the return pump (7), **characterized** in that prefilling is effected by actuation of the brake power booster (5) irrespective of the driver's wish, and in that, after prefilling of the wheel brakes (17, 18), during driving stability and/or traction slip control operations, the suction side of the return pump (7) is acted upon by the master cylinder pressure by maintaining the actuation of the brake power booster (5) irrespective of the driver's wish, with the connection between the master brake cylinder (3) and the low-pressure accumulator (13) closed.

2. Method as claimed in claim 1, **characterized** in that the actuation of the brake power booster (5) by the driver is sensed, and the actuation irrespective of the driver's wish is reduced accordingly.

3. Method as claimed in claim 1 or claim 2, **characterized** in that the hydraulic pressure introduced into the master brake cylinder (3) is determined continuously.

4. Method as claimed in claim 3, **characterized** in that the pressure is determined by pressure sensors (22, or 32, 33) connected to the pressure chambers of the master brake cylinder (3).

5. Method as claimed in any one of claims 1 to 4, **characterized** in that the actuating force which is introduced by a pedal (6) actuating the brake power booster (5) is sensed.

6. Method as claimed in any one of the preceding claims, **characterized** in that the output pressure of the return pump (7) is limited.

7. Method as claimed in any one of the preceding claims, **characterized** in that the hydraulic connection between the master brake cylinder (3) and the suction side of the return pump (7) is closed at any master brake cylinder pressures desired.

8. Method as claimed in claim 7, **characterized** in that the hydraulic connection between the master brake cylinder (3) and the suction side of the return pump (7) is closed only until the pressure fluid volume which is stored in the low-pressure accumulator (13) has been conducted to the pressure side of the return pump (7).

## Revendications

1. Procédé de fonctionnement d'un système de freinage antiblocage pour véhicule automobile, servant à la régulation de la stabilité de conduite et/ou à la régulation du glissement de traction et comprenant un amplificateur pneumatique de force de freinage (5) et, monté en aval de l'amplificateur de force de freinage (5), un maître-cylindre de frein (3) aux chambres de pression duquel sont raccordés, par l'intermédiaire d'un hydrobloc ABS comportant une pompe de refoulement (7), des freins de roue (17, 18) qui sont associés aux différentes roues du véhicule, peuvent communiquer avec un accumulateur basse pression (13) raccordé au côté d'aspiration de la pompe de refoulement (7) et sont préremplis lors de l'entrée en régulation de stabilité de conduite et/ou de glissement de traction, tandis qu'après le préremplissage, la communication entre le maître-cylindre de frein (3) et les freins de roue (17, 18) est fermée au moyen d'une valve d'isolement (10) et l'établissement supplémentaire de pression dans les freins de roue (17, 18) a lieu au moyen de la pompe de refoulement (7), caractérisé en ce que le préremplissage a lieu au moyen d'un actionnement de l'amplificateur de force de freinage (5) qui est indépendant de la volonté du conducteur et en ce qu'après le préremplissage des freins de roue (17, 18), pendant la régulation de stabilité de conduite et/ou la régulation du glissement de traction, le côté d'aspiration de la pompe de refoulement (7) est soumis à la pression du maître-cylindre de frein, du fait que l'actionnement de l'amplificateur de force de freinage (5) indépendant de la volonté du conducteur est maintenu, la liaison allant du maître-cylindre de frein (3) à l'accumulateur basse pression (13) étant bloqué.

2. Procédé suivant la revendication 1, caractérisé en ce que l'actionnement de l'amplificateur de force de freinage (5) par le conducteur est détecté et l'actionnement indépendant de la volonté du conducteur est réduit en conséquence.

3. Procédé suivant la revendication 1 ou 2, caractérisé en ce que la pression hydraulique créée d'une manière commandée dans le maître-cylindre de frein (3) est relevée en continu.

4. Procédé suivant la revendication 3, caractérisé en ce que le relevé de pression a lieu au moyen de capteurs de pression (22 ou 32, 33) raccordés aux chambres de pression du maître-cylindre de frein (3).

5. Procédé suivant l'une des revendications 1 à 4, caractérisé en ce que la force d'actionnement appliquée au moyen d'une pédale (6) actionnant l'amplificateur de force de freinage (5) est détectée.

6. Procédé suivant l'une des revendications précédentes, caractérisé en ce que la pression initiale de la pompe de refoulement (7) est limitée.

7. Procédé suivant l'une des revendications précédentes, caractérisé en ce que la liaison hydraulique entre le maître-cylindre de frein (3) et le côté d'aspiration de la pompe de refoulement (7) est bloquée pour des pressions quelconques du maître-cylindre de frein.

8. Procédé suivant la revendication 7, caractérisé en ce que la liaison hydraulique entre le maître-cylindre de frein et le côté d'aspiration de la pompe de refoulement (7) n'est bloquée que jusqu'à ce que le volume d'agent de pression se trouvant dans l'accumulateur à basse pression (13) ait été fourni au côté de refoulement de la pompe de refoulement (7).
